# EUROPEAN PATENT SPECIFICATION

(11) **EP 0 384 238 B1**
(45) Date of publication and mention of the grant of the patent: **23.03.1994**
(21) Application number: 90102557.7
(22) Date of filing: 09.02.1990
(51) Int. Cl.: A23B 7/022, A23B 7/08, A23G 3/00

(54) **Method of preparing a long-life fruitbased stuffing for pastry products**
Verfahren zur Herstellung einer langhaltbaren Fruchtfüllung für Konditorwaren
Procédé pour préparer un fourrage pour pâtisseries à base de fruits à longue conservation

(30) Priority: 24.02.1989 IT 1955689
(43) Date of publication of application: 29.08.1990
(73) Proprietor: BARILLA G. e R. F.lli - Società per Azioni, 43100 Parma (IT)
(72) Inventor: Bocelli, Franco, I-43016 San Pancrazio-Parma (IT)
(74) Representative: Bottero, Claudio

(56) References cited:
- EP-A- 0 337 621
- US-A- 4 542 033
- US-A- 4 832 969

## Description

This invention relates to a method of preparing a long-life, fresh fruit-based filling for pastry products.

The invention is also concerned with a commercial pastry product incorporating said filling, and particularly such bakery products as fruit pies, filled biscuits, strudel, etc.

In the manifacture of pastry products incorporating fresh fruit-based fillings, a general requirement is that the wholesomeness and non-toxicity of the product be ensured over time, on the one side, and that the physical and organoleptic properties of the fresh fruit employed for the stuffing be preserved, on the other side. This in order to have the properties of a "homemade" pie, biscuit, or strudel product filled with fresh fruit duplicated as far as possible.

As is recognized in the art, fresh fruit-based fillings used to fill commercial pastry products undergo quick and substantial alteration within a short (3-4 days) time from preparation, due to the growth of pathogenic micro-organism, while just as quickly losing their original organoleptic characteristics and generating toxic agents.

In addition, already after a short period of time, the filling tends to lose its original, peculiar chewing qualities, which loss is accompanied by migration of a substantial amount of its moisture content toward the outward portion of the filled product. The latter gradually loses its original firmness to become soaked within a short time.

The above listed problems are recognizably attributable to the high moisture content which is typical of such fillings, and above all, to the high value of their "Aw" or water activity. In this respect, it may be consonant to recall that the Aw parameter is directly proportional to the amount of water present in the filling and allowed to migrate out.

In order to keep bakery products filled with fresh fruit wholesome over time, the prior art provides for their preservation at a temperature of about 2-4°C.

This procedure involves some well-recognized complications connected with the establishment of a suitable sales network to maintain a cold chain which encompasses production, packaging, storage, transport, display for selling and requires temperature and humidity conditions which are not easily attained, maintained, and monitored. In any case, the above-noted substantial deterioration in the structural characteristics of both the filling and the stuffed product.

A further limitation to the use of fresh fruit-based fillings in commercial pastry comes from the seasonal character of fruit availability, which fruit must be also kept under cool storage conditions or in some other way preserved for use at any time of the year.

In an effort to overcome the problems posed by setting up a suitable cold cycle, the pertinent prior art has developed some methods directed to provide bakery products which can be filled with fruit and yet preservable at ambient temperature.

A first of such methods provides for the use of a filling prepared from dried fruit, usually having a moisture content within the approximate range of 5% to 20% by weight, which fruit is then to be hydrated back to a moisture level of about 80% by weight.

However, re-hydration of dried fruit cannot lead to full recovery of the structural and organoleptic characteristics of the original fresh fruit; re-hydrated fruit, in fact, has a smaller volume and a firmer consistency on chewing than the fresh product.

Subsequent to filling and baking, moreover, the filled article still exibits, albeit to a somewhat attenuated extent, the same faults as mentioned above because of moisture migration from the filling to the outward portion of the article, with consequent loss of the structural characteristics of said outward portion and of the original color and flavor characteristics of fresh fruit.

A second method proposed and implemented in the prior art to provide a preservable filled product at ambient temperature consists of preparing a filling from basically candied chopped fruit. As is known, the candying process results in a drastic reduction of the moisture content of fruit down to values in the 5% to 20% range with concurrent increase of the sugar content up to values which may reach 70-80% by weight.

The candying method, while affording on the one side a finished product which can be preserved over time without development of moisture migration phenomena and without requiring cold storage, ensures no retention on the other side, of those organoleptic properties (i.e. color, flavor, and chewing consistency) as are typical of the original fresh fruit.

In fact, fillings based on the use of candied fruit exibit volume loss and enhanced fruit consistency to a "gummy" character. In other words, candied fruit completely loses not only the mellowness but also the flavor which typify the starting fresh fruit.

A pastry product filled therewith, consequently, shows organoleptic characteristics which are very far from those of a similar "homemade" product.

A third method uses a filling obtained by deep freezing and subsequently candying fresh fruit.

This filling, while having a comparable chewing consistency with that of fresh fruit, also has a moisture content which is far too high and flavor and color characteristics which are sharply different from those of fresh fruit. Thus, the resulting filled article is once again far from its homemade counterpart.

Finally, according to the prior art, the non-toxicity of the filling for a prolonged period of time may only be attained adding thereto preservatives, i.e. cemical substance able to suppress microbial growth but at the same time no longer acceptable from a nutritional point of view.

A method suitable for preparing shelf stable fruit pieces without adding preservative is disclosed in US-A-4,542,033.

Such a method comprises i.a. the step of cooking fruit pieces in sugar syrups.

The technical problem that underlies this invention is to provide a method of preparing chopped fresh fruit-based filling for pastry products, whose organoleptic and consistency properties are constant over time and substantially comparable with those of a fresh fruit fillings, and which can yield a stuffed pastry product exibiting long shelf-life features at ambient temperature without addition of preservatives and showing a chewing consistency which is time stable and comparable with that of a newply prepared product filled with fresh fruit.

This problem is solved, according to the invention, by a method as indicated, including the preliminary steps of fresh fruit washing and chopping into pieces having a predetermined size, and being characterized in that it comprises the following steps:
- processing the fruit pieces so as to partially loosen the cellulose fibers included in the structure thereof;
- partially candying the pieces so processed to attain a moisture content of from 50% to 60% by weight and a sugar content of from 30% to 40% by weight;
- de-hydrating the partially candied pieces to yield a filling with a final moisture content of from 40% to 50% by weight, a sugar content not exceeding 45% by weight, a water activity Aw of from 0.75 to 0.85, and a pH of from 2.5 to 4.5.

The fruit, subsequent to washing and core or stone removal, is reduced to appropriate sizes and shapes -- either in segments or small cubes, according to species -- to resemble as much as possible the size and appearance of a typical homemade stuffing.

Said preliminary steps of fruit processing may optionally be followed, where the species of the fruit (e.g. apples or pears) so require, by a so-called surface de-activation step serving to prevent oxidative browning of the pieces on exposure to air oxygen. In order to keep the pH of fresh fruit at a constant value, surface de-activation is advantageously applied by dipping the pieces of fruit at room temperature into an aqueous solution of citric acid at a by-weight concentration of from 2% to 20% for a time period of between 1 and 20 minutes.

The step of partial loosening of the cellulose fibers making up the main structure of the fruit serves to set cellulose fibers apart from one another in a controlled fashion to accomplish a partial modification of the fruit original structure.

The treatment of partial loosening of the cellulosic fibers is performed by subjecting the fruit to de-hydratation down to a moisture concent in the 70% to 85% range, followed by deep-freezing to temperatures within the range of from -5°C to -20°C.

In this way, the controlled loosening of the fruit fibers matrix takes place by solidification of residual water trapped in between the fibers to form minute ice particles whose expansion results in the fibers being partially dislodged apart as desired.

To achieve control over the extent of this loosening, the percentage of moisture in the fruit pieces must be strictly maintained at levels not to exceed 85% by weight, if the product structure is to be prevented from breaking up completely so that it irreversibly loose its consistency properties.

Said de-hydration step is applied -- using conventional drying equipment -- at temperatures in the 40° to 60°C range for a time duration in the 2 to 5 hours range.

The deep-frozen fruit pieces are then brought back to a temperature in the 0° to 30°C range by de-freezing, such as in a microwave oven, and delivered to the next step of partial candying.

The latter step has the important function of introducing, into the loosened fibrous structure of the fruit, sugar molecules to provide a supporting action which is vital to ensure that, during the following process step, a substantially constant volume of chopped fruit can be maintained.

The sugar molecules incorporated into the loosened fibrous structure of the fruit also perform the function just as important, of binding yp the moisture contained in the fruit so as to later keep the "Aw" value controlled within said 0.75 - 0.85 range in the final filling.

The partial candying step is carried out by dipping the chopped fruit into sugar solutions and/or fruit juices, optionally acidified and flavored as required.

The sugar solution of this invention include at least one sugar selected from a group which comprises sucrose, dextrose, fructose, and glucose.

Such solution are at a sugar concentration whitin the by-weight range of 40% to 80%.

Throughout said partial candying step, the fruit pH is controlled by using sugar solution additivated with acidifying agents. The latter are selected from a group including citric, ascorbic, tartaric, lactic, propionic acid which are added in amounts of approxymately 4-8% by weight of the solution overall weight. Citric acid and ascorbic acid are the preferred acidifying agents.

In order to impart special flavoring to the final filling, or to enhance the original flavor characteristics of the fruit, the sugar solutions eployoed for candying are additivated with such flavoring substance as natural flavorings, fruit syrups, aromatic fruit distillates.

The fruit partial candying step is carried out at a temperature of from 20°C to 70° C for a time varying between 2 and 16 hours, preferably at 30° C for 16 hours.

It has been found, moreover, that in order for the sugars being employed to effectively perform said supporting function without altering the chewing consistency of the fruit, their amounts by weight in the fruit should range from 30% to 40% and preferably be equal to 35%.

On candying, the fruit moisture content changes from the initial value of 88-90% by weight to a value of about 50-60% by weight, with "Aw" dropping from about 1.0 to a value in the .85 to .95 range.

At such values of "Aw", the growth of pathogenic micro-organisms within the filling is prevented, while no worsening of the desired mellowness characteristics thereof takes place. This de-hydration step is advantageously performed by vacuum-drying at temperatures in the 40° to 70° C range for a time varying between 30 and 200 minutes and at pressures in the range 400-600 mmHg.

As a result of the decreased moisture content, the sugars present in the filling will undergo a corresponding encrease in concentration which should be kept at a value not exceeding 45% by weight to keep the fruit chewing consistency unaltered.

The pH of the chopped fruit filling thus obtained sets at values in the 2.5 to 4.5 range which vary each time according to the fruit used and are in any case, substantially comparable with those of the fresh fruit.

According to a further aspect of this invention, it should be noted that said pH value contributes, in synergistic combination with the low value of the "Aw", toward preventing the growth of pathogenic micro-organisms.

The resulting fresh fruit-based filling has a life of approximately 2-3 months at room temperature, which is definitely longer that that of fresh fruit filling prepared in accordance with prior methods.

In addition, it has organoleptic (flavor, color, and volume) characteristics and a chewing consistency which compare well with those of a filling prepared from fresh fruit.

It should also be noted that a pastry product incorporating the filling prepared with the method of this invention retains its characteristic firmness substantially unalterated throughout its shelf-life span, with no migration of moisture from the filling to the outer portion of the product.

According to yet another aspect of this invention, the optimum moisture content of approximately 30% by weight, required for storage at room temperature of the filling for even longer periods of time (in the order of 10-12 months), is advantageously achieved in preparing a baked pastry product.

After the stuffed product has been baked, the filling develops the characteristics listed in Table 1 below (% by weight).

**TABLE 1**

| | |
|---|---|
| Aw | = 0.75-0.85 |
| Moisture | = 20-30% |
| Sugars | = 55-65% |
| pH | = 3-5 |

On these, the following values are the preferred ones;
Aw= 0.80; moisture= 30%; sugars= 55%; pH= 3.

By virtue of the above combined characteristics of the filling, the resulting stuffed product not only develops longer shelf-life features at room temperature -- being on the order of 10 to 12 months -- but also a firm structure quite comparable with that of freshly prepared stuffed product. The filling incorporated thereto will transfer no moisture, in fact, to the surrounding product, which shows substantially unchanged response to cutting even after a few months have elapsed from packaging.

According to a further aspect of this invention, the shelf-life term of that same filling may be advantageously extended up to 12 months by so protracting the de-hydratation step for the candied pieces as to attain final moisture. pH, Aw, and sugar content values which fall within the ranges of values shown in Table 1 above.

Thus, a chopped fruit filling is provided which has organoleptic characteristics substantially similar to those of fresh fruit, and extended shelf-life at roon temperature, being advantageously usable as base material for commercial pastry, in its condition as delivered from the process.

Further features and advantages of the invention will become apparent from a detailed description of an example, given herein by way of illustration and not of limitation, of the inventive method of preparing chopped fruit filling for use in commercial pastry products.

### EXAMPLE

15 Kg apples of the "Imperatore" variety have been graded, washed, peeled, stripped of their cores, and chopped into segments to an overall weight of 10 Kg.

The oxidative browing phenomena on the outer surfaces of the segments were inhibited by dipping the segments into a 6% citric acid solution for 5 minutes. The processed segments were then partially dried to reduce the starting moisture content of about 88% to a value of about 75%, and thereafter chilled to a core temperature of about -10°C in each piece.

The segments were then brought back to room temperature by exposure to air at 30°C, and subjected to partial candying at a temperature of about 30°C for 12 hours following dipping into a sugar solution comprising (in percentage by weight): sucrose 26%, dextrose 48%, water 26%.

On candying, the moisture content changed from a value of 75% to one of 55%, while the sugar content changed from a value of 25% to a value of 35%.

The dripped segments were then vacuum-dried in a conventional device at 50°C for 3 hours (P= 450 mmHg).

The resulting filling showed on analysis the following characteristics:

| | |
|---|---|
| Aw | = 0.8 |
| Moisture | = 45% |
| Sugars | = 45% |
| pH | = 3.3 |

The chopped apples thus processed were employed to conventional fill an intermediate dough to yield a traditional apple pie after backing at 180°C for 40 minutes.

After baking, the filling showed the following characteristics:

| | |
|---|---|
| Aw | = 0.80 |
| Moisture | = 30% |
| Sugars | = 55% |
| pH | = 3 |

## Claims

1. Method of preparing a long-life filling for pastry products including processed fresh fruit, comprising
- washing and chopping said fresh fruit into pieces having a predetermined size,
- processing the fruit pieces so as to partially loosen the cellulose fibers included in the structure thereof;
- partially candying the pieces so processed to attain a moisture content of from 50% to 60% by weight and a sugar content of from 30% to 40% by weight; and
- de-hydrating the partially candied pieces to yield a filling with a final moisture content of from 40% to 50% by weight; a sugar content not exceeding 45% by weight; a water activity Aw of from 0.75 to 0.85 and pH of from 2.5 to 4.5, and characterized in that said cellulose fibers are loosened by a treatment comprising the steps of:
de-hydrating the chopped fruit down to a moisture content of from 70% to 85% by weight, and
deep-freezing the fruit thus obtained at a temperature of from -5°C to -20°C.

2. A method according to Claim 1, characterized in that said loosening of the cellulose fibers is preceded by a step of dipping the chopped fresh fruit into an aqueous solution including at least one sugar selected from a group comprising sucrose, glucose, fructose, dextrose, xylose.

3. A method according to Claim 2, characterized in that said at least one sugar has a concentration in said aqueous solution of from 10 to 30° BX.

4. A method according to Claim 2, characterized in that said aqueous solution further includes at least one organic acid selected from a group comprising citric acid, tartaric acid, ascorbic acid, lactic acid, propionic acid, so as to maintain the pH of said chopped fresh fruit at substantially the same value as that of the fresh fruit.

5. A method according to Claim 1, characterized in that said dehydration step is carried out at a temperature of from 40° to 60°C for a time of from 2 to 5 hours.

6. A method according to Claim 1, characterized in that said step of partial candying comprises dipping the chopped fruit, at a temperature of from 20° to 70°C and for a time of from 2 to 16 hours, into a solution including at least one sugar selected from a group comprising sucrose, dextrose, fructose, glucose.

7. A method according to Claim 6, characterized in that said partial candying step is carried out at a temperature of 30°C for 16 hours.

8. A method according to Claim 6, characterized in that the concentration of said least one sugar in said solution ranges from 40% to 80% by weight, thereby controlling the sugar content within said chopped fruit in the range of from 30% to 50% by weight, preferably at 40% by weight.

9. A method according to Claim 6, characterized in that said solution further includes at least one organic acid selected from a group comprising citric, ascorbic, tartaric, lactic, propionic acid.

10. A method according to Claim 9, characterized in that said at least one organic acid is provided at a concentration in said solution of from 4% to 8% by weight.

11. A method according to Claim 6, characterized in that said solution includes at least one flavoring substance selected from a group comprising natural flavor, fruit syrup, aromatic fruit distillates.

12. A method according to Claim 1, characterized in that said de-hydration step is carried out by vacuum-drying said chopped fresh fruit at a temperature of from 40° to 70°C for a time period of from 30 to 200 minutes.

13. Long-life filling comprising chopped fresh fruit for pastry products, characterized in that it is prepared by the method according to any Claim 1 to 12.

14. A pastry product, characterized in that it incorporates a long-life filling of chopped fresh fruit according to Claim 13.

## Patentansprüche

1. Verfahren zum Bereiten einer langhaltbaren Füllung für Konditorwaren, die verarbeitetes Frischobst enthalten, das umfaßt:
Waschen und Zerkleinern von Frischobst in Stücke einer vorgegebenen Größe;
Verarbeiten der Obststücke dahingehend, um die Zellulosefasern, die in deren Struktur vorhanden sind, teilweise zu lösen;
teilweises Kandieren der so verarbeiteten Stücke, um einen Feuchtigkeitsgehalt von 50 bis 60 Gewichtsprozent und einen Zuckergehalt von 30 bis 40 Gewichtsprozent zu erhalten; und
Dehydrieren der teilweise kandierten Stücke, um eine Füllung mit einem Endfeuchtigkeitsgehalt von 40 bis 50 Gewichtsprozenten zu liefern; einen Zuckergehalt, der 45 Gewichtsprozent nicht übersteigt; eine Wasseraktivität Aw von 0,75 bis 0,85 und einen pH-Wert von 2,5 bis 4,5, und
das dadurch gekennzeichnet ist, daß die Zellulosefasern durch eine Behandlung gelöst werden, die die folgende Schritte aufweist:
Dehydrieren des zerkleinerten Obstes bis hinunter zu einem Feuchtigkeitsgehalt von 70 bis 85 Gewichtsprozent; und
Tiefkühlen des so erhaltenen Obstes bei einer Temperatur von -5 °C bis -20 °C.

2. Verfahren nach Anspruch 1, gekennzeichnet durch einen vorhergehenden Schritt, der darin besteht, daß das zerkleinerte Frischobst in eine wässerige Lösung getaucht wird, die wenigstens einen Zucker aus einer Gruppe aufweist, die Rohrzucker, Traubenzucker, D-Fruktose, D-Glukose, Xylose enthält.

3. Verfahren nach Anspruch 2, dadurch gekennzeichnet, daß zumindest ein Zucker in der wässerigen Lösung eine Konzentration von 10 bis 30° BX aufweist.

4. Verfahren nach Anspruch 2, dadurch gekennzeichnet, daß die wässerige Lösung weiter zumindest eine organische Säure aufweist, die aus einer Gruppe ausgewählt ist, die eine Zitronensäure, Weinsäure, Askorbinsäure, Milchsäure, Propionsäure umfaßt, um so den pH-Wert des zerkleinerten Frischobstes auf im wesentlichen dem gleichen Wert wie dem des Frischobstes beizubehalten.

5. Verfahren nach Anspruch 1, dadurch gekennzeichnet, daß der Dehydrierschritt bei einer Temperatur von 40 bis 60 °C zwei bis fünf Stunden lang ausgeführt wird.

6. Verfahren nach Anspruch 1, dadurch gekennzeichnet, daß der Schritt eines partiellen Kandierens das Tauchen des zerkleinerten Obstes bei einer Temperatur von 20 bis 70 °C zwei bis sechzehn Stunden lang in einer Lösung umfaßt, die wenigstens einen Zucker aus einer Gruppe aufweist, die Rohrzucker, D-Glukose, D-Fruktose, Traubenzucker enthält.

7. Verfahren nach Anspruch 6, dadurch gekennzeichnet, daß der Schritt zum partiellen Kandieren bei einer Temperatur von 30 °C sechzehn Stunden lang ausgeführt wird.

8. Verfahren nach Anspruch 6, dadurch gekennzeichnet, daß die Konzentration des wenigstens einen Zuckers im Bereich von 40 bis 80 Gewichtsprozent liegt, wodurch der Zuckergehalt innerhalb des zerkleinerten Obstes im Bereich von 30 bis 50 Gewichtsprozent, vorzugsweise auf 40 Gewichtsprozent einreguliert wird.

9. Verfahren nach Anspruch 6, dadurch gekennzeichnet, daß die Lösung weiter wenigstens eine organische Säure aufweist, die aus einer Gruppe ausgewählt ist, die Zitronensäure, Askorbinsäure, Weinsäure, Milchsäure, Propionsäure enthält.

10. Verfahren nach Anspruch 9, dadurch gekennzeichnet, daß wenigstens eine organische Säure in dieser Lösung mit einer Konzentration von 4 bis 8 Gewichtsprozent vorgesehen ist.

11. Verfahren nach Anspruch 6, dadurch gekennzeichnet, daß die Lösung wenigstens eine Geschmackssubstanz aufweist, die aus einer Gruppe ausgewählt ist, die eine natürliche Geschmacksubstanz, einen Fruchtsirup, aromatische Obstdestillate enthält.

12. Verfahren nach Anspruch 1, dadurch gekennzeichnet, daß der Dehydrierschritt durch Vakuumtrocknen des zerkleinerten Obstes bei einer Temperatur von 40 bis 70 °C dreißig bis zweihundert Minuten lang ausgeführt wird.

13. Langhaltbare Füllung mit zerkleinertem Frischobst für Konditorwaren, dadurch gekennzeichnet, daß sie nach dem Verfahren nach Anspruch 1 bis 12 zubereitet wird.

14. Konditorware, dadurch gekennzeichnet, daß sie eine langhaltbare Füllung von zerkleinertem Frischobst nach Anspruch 13 enthält.

## Revendications

1. Procédé de préparation d'un fourrage longue conservation pour pâtisseries comportant des fruits frais traités, comprenant les étapes consistant à :
- laver et couper lesdits fruits frais en morceaux de taille prédéterminée;
- traiter les morceaux de fruits de façon à en relâcher partiellement les fibres de cellulose incluses dans leur structure;
- glacer partiellement les morceaux ainsi traités pour atteindre une teneur en humidité comprise entre 50 % et 60 % en poids et une teneur en sucre comprise entre 30 % et 40 % en poids ; et
- déshydrater les morceaux partiellement glacés pour obtenir un fourrage ayant une teneur finale en humidité comprise entre 40 et 50 % en poids, une teneur en sucre inférieure ou égale à 45 % en poids, une activité d'eau Aw comprise entre 0,75 et 0,85 et un pH compris entre 2,5 et 4,5, et caractérisé en ce que lesdites fibres de cellulose sont relâchées par un traitement comprenant les étapes consistant à :
- déshydrater les fruits en morceaux jusqu'à une teneur en humidité comprise entre 70 % et 85 % en poids ; et
- congeler les fruits ainsi obtenus à une température comprise entre -5°C et -20°C.

2. Procédé selon la revendication 1, caractérisé en ce que ledit relâchement des fibres de cellulose est précédé par une étape consistant à immerger les fruits frais en morceaux dans une solution aqueuse comprenant au moins un sucre sélectionné dans un groupe constitué par le saccharose, le glucose, le fructose, le dextrose, le xylose.

3. Procédé selon la revendication 2, caractérisé en ce que ledit sucre au nombre minimal de 1 a une concentration dans ladite solution aqueuse comprise entre 10 et 30° BX.

4. Procédé selon la revendication 2, caractérisé en ce que ladite solution aqueuse comprend en outre au moins un acide organique sélectionné dans un groupe comprenant acide citrique, acide tartrique, acide ascorbique, acide lactique, acide propionique, de façon à maintenir le pH desdits fruits frais en morceaux à une valeur sensiblement égale à celui des fruits frais.

5. Procédé selon la revendication 1, caractérisé en ce que ladite étape de déshydratation est mise en oeuvre à une température comprise entre 40° et 60°C pendant une durée comprise entre 2 et 5 h.

6. Procédé selon la revendication 1, caractérisé en ce que ladite étape de glaçage partiel comprend l'immersion des fruits coupés en morceaux, à une température comprise entre 20° et 70°C et pendant une durée comprise entre 2 et 16 h, dans une solution comprenant au moins un sucre sélectionné dans un groupe constitué par le saccharose, le dextrose, le fructose, le glucose.

7. Procédé selon la revendication 6, caractérisé en ce que ladite étape de glaçage partiel est mise en oeuvre à une température de 30°C pendant 16 h.

8. Procédé selon la revendication 6, caractérisé en ce que la concentration dudit sucre au nombre minimal de 1 dans ladite solution est comprise entre 40 % et 80 % en poids, ce qui permet de maintenir la teneur en sucre dans lesdits fruits coupés en morceaux dans la plage de 30 % à 50 % en poids, de préférence à 40 % en poids.

9. Procédé selon la revendication 6, caractérisé en ce que ladite solution comprend en outre au moins un acide organique sélectionné dans un groupe constitué par l'acide citrique, l'acide ascorbique, l'acide tartrique, l'acide lactique, l'acide propionique.

10. Procédé selon la revendication 9, caractérisé en ce que ledit acide organique au nombre minimal de 1 est fourni à une concentration dans ladite solution comprise entre 4 % et 8 % en poids.

11. Procédé selon la revendication 6, caractérisé en ce que ladite solution comprend au moins une substance aromatisante sélectionnée dans un groupe constitué par un arôme naturel, un sirop de fruits, des distillats aromatiques de fruits.

12. Procédé selon la revendication 1, caractérisé en ce que ladite étape de déshydratation est mise en oeuvre par séchage sous vide desdits fruits frais coupés en morceaux à une température comprise entre 40° et 70°C pendant une durée comprise entre 30 et 200 min.

13. Fourrage longue conservation comprenant des fruits frais coupés en morceaux pour pâtisseries, caractérisé en ce qu'il est préparé par le procédé selon l'une quelconque des revendications 1 à 12.

14. Pâtisserie, caractérisée en ce qu'elle contient un fourrage longue conservation de fruits frais coupés en morceaux selon la revendication 13.
